(19) Europäisches Patentamt

European Patent Office

Office européen des brevets

(11) **EP 0 977 192 A1**

(12) **EUROPEAN PATENT APPLICATION**
published in accordance with Art. 158(3) EPC

(43) Date of publication:
02.02.2000 Bulletin 2000/05

(51) Int. Cl.[7]: **G11B 7/135**, G11B 7/24

(21) Application number: 98912778.2

(86) International application number:
PCT/JP98/01683

(22) Date of filing: 13.04.1998

(87) International publication number:
WO 98/47138 (22.10.1998 Gazette 1998/42)

(84) Designated Contracting States:
DE FR GB

(30) Priority: 14.04.1997 JP 9585697
14.04.1997 JP 9585897

(71) Applicant:
TORAY INDUSTRIES, INC.
Tokyo 103-8666 (JP)

(72) Inventors:
• HIROTA, Kusato
Takaoka-shi, Toyama 933-0837 (JP)

• OHBAYASHI, Gentaro
Kusatsu-shi, Shiga 525-0057 (JP)
• OKUYAMA, Futoshi
Yokkaichi-shi, Mi e512-1211 (JP)

(74) Representative:
Watkin, Timothy Lawrence Harvey et al
Mewburn Ellis,
York House,
23 Kingsway
London, WC2B 6HP (GB)

(54) **OPTICAL RECORDING DEVICE AND OPTICAL RECORDING MEDIUM**

(57) An optical recording device which enables high-density recording onto an optical recording medium, has a large degree of margin in depth of focus, has less risk of damage to the optical recording medium or an optical system, realizes stable recording and reproducing characteristics, and may be easily manufactured. The optical recording device includes an optical recording medium having a lubricant layer on the outermost surface on the incident light side, an optical system including an oprical waveguide having a near-field lens or a minute aperture provided in contact with or close to the optical recording medium, and a light source. More preferably, an apotizer is provided on the side of the light source or the side of the near-field lens of a collimating lens located between the near-field lens and the light source. The optical recording medium is constituted by a multilayer body formed by stacking at least a luburicant layer, a recording layer, a dielectric layer, a reflective layer and a substrate in this order.

**Fig. 1**

**Description**

Technical field

The present invention relates to an optical recording device using an optical recording medium allowing information to be recorded or reproduced by irradiation with light, and also relates to an optical recording medium preferably used in this device.

Especially the present invention relates to an improvement of an optical recording device using a solid immersion lens, etc. for recording with an objective lens having a high numerical aperture kept close to the surface of a recording medium, which allows recorded information to be erased and rewritten and allows information signals to be recorded at a high speed and at a high density.

Background arts

Conventional optical recording systems for recording by near-field light with an objective lens having a high numerical aperture kept in contact with or closely spaced from the surface of a recording medium are as described below.

An optical recording system of this type using a solid immersion lens is disclosed in US Patent No. 5,125,750.

The optical system uses an objective lens including an aspherical surface with an about 0.5 numerical aperture as used in an ordinary optical recording head, as a collimator, and the flat surface of a hemi spherical lens is disposed between the lens and a recording medium, in contact with the surface of the recording medium, or being closely spaced from the surface with a slight clearance corresponding to the wavelength of the light used. In this case, the effective numerical aperture increases by a factor corresponding to the refractive index of the hemi spherical lens, to reduce the beam diameter, for allowing high density recording.

As a technique for improving the above technique, SPIE, Vol. 2412, P. 80 proposes an optical recording system using a stigmatic focusing solid immersion lens. In this case, the effective numerical aperture is improved to about the square of the refractive index of the lens.

As an optical recording medium used when the gap between the surface of a lens and the surface of the optical recording medium is as small as microns, US Patent No. 5,470,627 proposes an optical recording medium in which a recording layer is provided on the incident light side on a substrate and is protected on the surface by a protective layer.

A method of recording at a high density by using the near-field light emitted from a minute aperture at the tip of a finely worked optical waveguide of a semiconductor laser is proposed in US Patent No. 5,625,617, and a method of recording at a high density using the near-field light emitted from a minute aperture at a tapered tip of an optical fiber waveguide is proposed in Appl. Phys. Lett. 61, 142 (1992).

Disclosure of the invention

However, these prior arts have the following problems.

Firstly, in the near-field light recording by an objective lens having a high numerical aperture such as a solid immersion lens or stigmatic focusing solid immersion lens or by an optical waveguide having a minute aperture kept in contact with or closely spaced from a recording medium surface, since the distance between the surface of the optical recording medium and the light emitting face of the lens or optical waveguide is very small (not larger than 1/2 of the light wavelength, typically less than about 200 nm), the surface of the optical recording medium is likely to contact the light emitting face of the optical system, threatening to abrade or damage the surface of the optical recording medium.

A first object of the present invention is to provide an excellent optical recording medium which allows high density recording, is less likely to be abraded or damaged and is easy to produce, and also to provide an optical recording device using the optical recording medium.

Secondly, when an optical system having a high numerical aperture such as a solid immersion lens is applied for optical recording, since the depth of focus is almost proportional to the wavelength/{2 • (numerical aperture$^2$)}, the allowance in the depth of focus becomes very small (approximately less than 1/4 of the conventional allowance) for variations of the focus position such as the deviations of the auto focusing mechanism, the relative position control mechanism between the optical recording medium surface and the lens, and the thicknesses of the substrate and recording layer of the optical recording medium.

A second object of the present invention is to provide an optical recording medium which has a larger allowance in the depth of focus, allows large capacity recording, is stable in recording and reproducing characteristics, and is easy to produce, and also to provide an optical recording device using the optical recording medium.

These objects of the present invention can be achieved by the optical recording device and optical recording medium described below.

First optical recording device of the present invention:

An optical recording device, which comprises an optical recording medium, an optical system for entering information into the optical recording medium or delivering information from the optical recording medium, and a light source, characterized in that the outermost layer of the optical recording medium facing the optical system is a lubricant layer, and that the optical system has a near-field lens provided in contact with or closely to the surface of the outermost layer of the optical recording medium.

In this device, it is preferable that the near-field lens has an effective numerical aperture of 0.8 to 2.

Second optical recording device of the present invention:

An optical recording device, which comprises an optical recording medium, an optical system for entering information into the optical recording medium or delivering information from the optical recording medium, and a light source, characterized in that the outermost layer of the optical recording medium facing the optical system is a lubricant layer, and that the optical system has a near-field lens provided in contact with or closely to the surface of the outermost layer of the optical recording medium, a collimating lens provided between the near-field lens and the light source, and an apodizer provided on the light source side or the near-field lens side of the collimating lens.

In this device, the collimating lens means a lens which has two actions of collimating light when information is delivered, i.e., reproduced from the optical recording medium, and focusing light when information is entered, i.e., recorded into the optical recording medium.

In this device, it is preferable that the near-field lens has an effective numerical aperture of 0.8 to 2.

Third optical recording device of the present invention:

An optical recording device, which comprises an optical recording medium, an optical system for entering information into the optical recording medium or delivering information from the optical recording medium, and a light source, characterized in that the outermost layer of the optical recording medium facing the optical system is a lubricant layer, and that the optical system has an optical waveguide having a minute aperture provided in contact with or closely to the surface of the outermost layer of the optical recording medium.

The optical recording medium of the present invention is an optical recording medium in which a recording layer formed on a substrate is irradiated with light to allow information to be recorded or reproduced, comprising a laminate with a lubricant layer, a recording layer, a dielectric layer, a reflective layer and a substrate laminated in this order.

Furthermore, the optical recording device and optical recording medium of the present invention include the following preferable embodiments:

(a) The near-field lens is any one of a solid immersion lens, stigmatic focusing solid immersion lens and liquid immersion lens.

(b) Both the surfaces of the near-field lens on the light source side and the optical recording medium side are spherical.

(c) The distance between the surface of the recording medium and the surface of the near-field lens in the periphery of the incident light beam spot on the surface of the optical recording medium on the incident light side is 10 nm to 200 nm.

(d) The near-field lens is made of a material mainly composed of aluminum oxide.

(e) The optical recording medium is a laminate with a lubricant layer, a recording layer, a dielectric layer, a reflective layer and a substrate laminated in this order.

(f) The optical recording medium is a laminate with a lubricant layer, a first dielectric layer, a recording layer, a second dielectric layer, a reflective layer and a substrate laminated in this order.

(g) A protective resin layer exists between the lubricant layer and the recording layer.

(h) The lubricant layer is a lubricant layer formed by a flowable liquid (hereinafter called a liquid lubricant layer).

(i) The lubricant layer is a lubricant layer formed by a solid (hereinafter called a solid lubricant layer).

(j) The lubricant layer consists of a solid lubricant layer and a liquid lubricant layer formed on it.

(k) The thickness of the liquid lubricant layer is not larger than 1/2 of the wavelength in vacuum of the light used for recording or reproducing and not smaller than 3 nm.

(l) The lubricant of the liquid lubricant layer contains at least one compound selected from a group consisting of polyfluoroethers, polyfluoroesters, fluoroalkylethylenes and fluoroalkylethanols.

(m) The solid lubricant layer is mainly composed of carbon or carbon nitride.

(o) The recording layer is made of a phase change recording material or magneto-optical recording material.

(p) The recording layer is made of a phase change recording material containing tellurium and at least two metals selected from a group consisting of germanium, antimony, indium, silver, palladium, platinum, gold, cobalt, chromium, niobium and nickel.

(q) The thickness of the first dielectric layer is 20 nm to 200 nm.

(r) The substrate is made of at least one resin selected from a group consisting of polycarbonates, polyolefins, polyimides, polyamides, polyphenylene sulfide and polyethylene terephthalate.

(s) The substrate is a flexible resin film or sheet with a thickness of 10 μm to 200 μm.

(t) The apodizer has a zonal aperture, or a circular or annular phase contrast plate.

(u) The apodizer is formed by a circular phase correction plate.

(v) The apodizer is formed by an annular phase correction plate.

(w) The apodizer is provided on the light source side of the collimating lens.

Brief description of the drawings

Fig. 1 is a typical front view showing an example of the optical recording device of the present invention.

Fig. 2 is a typical front view showing a portion of the optical system containing a near-field lens and an optical recording medium used in another example of the optical recording device of the present invention.

Fig. 3 is a typical front view showing a further other example of the optical recording device of the present invention.

Fig. 4 is a typical plan view showing an embodiment of the apodizer preferably used for the optical recording device of the present invention.

Fig. 5 is a typical side view of the apodizer shown in Fig. 4.

Fig. 6 is a typical plan view showing another embodiment of the apodizer preferably used for the optical recording device of the present invention.

Fig. 7 is a typical side view of the apodizer shown in Fig. 6.

Fig. 8 is a typical plan view showing a further other embodiment of the apodizer preferably used for the optical recording device of the present invention.

Fig. 9 is a typical side view of the apodizer shown in Fig. 8.

Fig. 10 is a typical cross sectional view showing an example of the optical recording medium of the present invention.

Fig. 11 is a typical cross sectional view showing another example of the optical recording medium of the present invention.

Fig. 12 is a typical cross sectional view showing a further other example of the optical recording medium of the present invention.

Fig. 13 is a typical cross sectional view showing a still further other example of the optical recording medium of the present invention.

Fig. 14 is a typical cross sectional view showing a still further other example of the optical recording medium of the present invention.

The best embodiments of the invention

Embodiments of the present invention and their actions are described below.

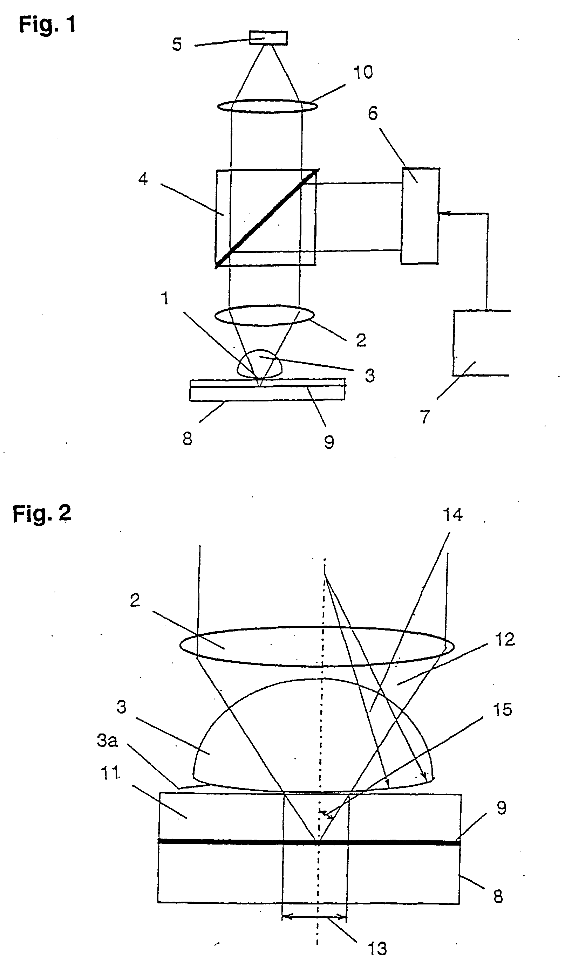

The optical recording device of the present invention shown in Fig. 1 comprises a laser drive circuit 7, a semiconductor laser 6, a beam splitter 4, a collimating lens 2, a near-field lens 3, a liquid lubricant layer as a lubricant layer 1 on the outermost surface of art optical recording medium 8, the optical recording medium 8 having a phase change type recording layer 9 below the lubricant layer 1, a condenser lens 10, and a photo diode 5. The near-field lens 3 and the liquid lubricant layer 1 contact each other, to form a liquid immersion lens.

In Fig. 1, the semiconductor laser 6 is driven by the laser drive circuit 7, to emit a laser beam. The laser beam is turned toward the collimating lens 2 through the beam splitter 4. The laser beam passing through the collimating lens 2 is condensed on the optical recording medium 8 by the near-field lens 3.

The light reflected from the optical recording medium 8 propagates through the near-field lens 3, the collimating lens 2 and the condenser lens 10, to fall on the photo diode 5, and the information recorded in the optical recording medium 8 brought by the reflected light is detected as electric signals.

In the device of this example, the near-field lens 3 used can also be a solid immersion lens or stigmatic focusing solid immersion lens. In this case, a very thin air layer of about 100 nm exists between the surface of the lubricant layer 1 and the surface of the near-field lens 3.

In the device of this example, the lubricant layer 1 used on the outermost surface of the optical recording medium 8 can also be a solid lubricant layer.

In the device of this example, though not illustrated, usually used optical head components such as a detection and control system for focusing of the optical system and a quarter wave plate are used. When a magneto-optical recording system is used, a magneto-optical head having a usually used polarization component detecting optical system is used.

It is preferable that the surface of the near-field lens 3 on the light source side (semiconductor layer 6 side) is spherical. The reasons are that a spherical lens can be more easily molded and polished than a non-spherical lens and can be higher in optical accuracy and lower in production cost.

It is preferable that the surface of the near-field lens 3 on the optical recording medium 8 side is spherical. The reason is that the area of the portion close to or in contact with the surface of the optical recording medium 8 can be small, and as a result, that even if roughness or dust exists on the surface of the optical recording medium 8, the lens can follow or contact the surface of the optical recording medium 8 more accurately.

The spherical form of the surface of the near-field lens 3 on the optical recording medium 8 side is described below in reference to Fig. 2.

In Fig. 2, the near-field lens 3 is located below the collimating lens 2, and the optical recording medium 8 is located to face the under surface 3a of the near-field lens 3. On the upper surface of the recording layer 9 of the optical recording medium 8, a surface protective layer 11 is provided. The surface protective layer 11 contains, as required, a transparent substrate and a dielectric layer and its outermost surface is a lubricant layer.

The spherical form of the surface of the near-field lens 3 on the optical recording medium 8 is designed based on the thickness of the surface protective layer 11 and the diameter 13 of the incident light beam 12 on the surface of the optical recording medium 8. If the thickness of the surface protective layer 11 is large, the radius of curvature 14 of the surface of the lens 3 is kept small, and if the thickness is small, the radius of curvature 14 is kept large.

If the distance between the surface of the optical recording medium 8 and the surface of the near-field lens 3 in the periphery of the incident light beam 12 on the surface of the optical recording medium 8 is S, the diameter 13 of the incident light beam 12 on the surface of the optical recording medium 8 is D, and the radius of curvature 14 is R, then the following relation holds.

$$S = R - (R^2 - (D/2)^2)^{1/2}$$

If the value of the distance S is not larger than 200 nm, the beam spot form of the incident light beam 12 becomes good preferably. Furthermore, to better manifest said effect due to the spherical surface, it is preferable that the value of the distance S is 10 nm or more. Based on these conditions, the value R of the radius of curvature 14 is decided.

If the thickness of the surface protective layer 11 is T and the spread angle 15 of the incident light beam (focusing beam) is θ, then relations of $D = T \cdot \tan\theta$ and $R = S/2 + T^2/8S$ hold. From these relations, the value R of the radius of curvature 14 is decided.

On the other hand, the spherical form of the near-field lens 3 on the light source side can be the spherical form used in the conventional solid immersion lens or stigmatic focusing solid immersion lens.

It is preferable that the collimating lens 2 is a non-spherical lens with a numerical aperture of 0.3 to 0.7 corrected in aberration. If the numerical aperture is less than 0.3, the effect of reducing the size of the beam spot of the incident light beam 12 is small, and if more than 0.7, the inclination and the axial displacement at the time of assembling are required to be more severely accurate.

As the collimating lens 2, a collimating lens marketed for a semiconductor laser can be used. However, if an ordinary marketed lens is used as it is, it must be corrected in the aberration corresponding to the cover glass. An objective lens designed for an optical disc or CD optical pickup can also be used as the collimating lens 2 if corrected in spherical aberration.

It is advantageous for production that the effective diameter of the collimating lens 2 is 2 mm to 7 mm. The collimator lens 2 is made of optical glass or resin like the near-field lens 3.

The effective numerical aperture of the optical system including the near-field lens 3 is expressed as $n \cdot \sin\theta$ wherein θ is the spread angle of the convergent beam 14 and n is the refractive index of the near-field lens 3.

The value of the numerical aperture is not especially limited, but it is preferable that the numerical aperture is 0.8 to 2. Especially preferable is 1.5 or less. If the value of the numerical aperture is less than 0.8, the advantage in view of high densification is small compared to the objective lens of the conventional optical disc. If more than 1.5, the accuracy required in the disposition of the lenses of the optical system becomes suddenly very severe, and since the depth of focus becomes shallow, it becomes difficult to maintain focusing in the recording with the lens moved for scanning.

For the support mechanism of the near-field lens 3 and the scanning method on the optical recording medium 8, for example, the floating head structure of the hard disc used hitherto can be used. For details, see Appl. Phys. Lett. 68 (2), 8 (1996).

A case of using an optical waveguide having a minute aperture in the optical system as another embodiment of the optical recording device of the present invention is described below. Optical waveguides with a minute aperture are disclosed in US Patent No. 5,625,617 and Appl. Phys. Lett. 61, 2, 13, (1992). Optical waveguides with a minute aperture disclosed in the above can be directly adopted in the optical system of the optical recording device of the present invention. An optical waveguide with a minute aperture is combined with an optical recording medium having a lubricant layer as the outermost layer, to constitute the optical recording device of the present invention.

If the near-field lens 3 is provided in contact with a liquid lubricant layer formed as the lubricant layer 1, to form a liquid immersion lens, the difference in refractive index between the lens and the liquid lubricant is smaller than the difference in refractive index between the lens not immersed and air (refractive index 1), since the refractive index of the lens material is usually about 1.5 to 2 while the refractive index of the liquid lubricant is usually about 1.5.

So, the numerical aperture of the collimating lens 2 becomes high, and the critical angle at which the marginal rays inside the lens are totally reflected is expanded. Therefore, compared to a non-immersed lens with the same effective numerical aperture, the distance between the lens and the dielectric layer or recording layer 9 of the optical recording medium 8 can be kept larger to allow easier constitution of the optical system.

For example, if a hemi spherical optical glass lens with a high refractive index (ng = 1.84) is used as the near-field lens 3, together with a liquid lubricant with a refractive index of 1.5, the NA of the collimator lens 2 becomes maximum about 0.8 and the effective numerical aperture of the optical system becomes maximum about 1.5. To avoid the occurrence of spherical aberration, it is preferable that the thickness of the liquid lubricant layer for immersion is smaller.

Furthermore if a stigmatic focusing solid immersion lens satisfying the aplanatic condition is used as the immersion lens, with the numerical aperture NA of the collimating lens 2 as 0.5, the refractive index of the immersion lens as 1.84 and the refractive index of the liquid lubricant as 1.5, the effective numerical aperture of the optical system is 1.69.

As described before, since the critical angle of the interface is larger compared to a case where an air layer intervenes, stable recording and reproduction can be achieved for variations of distance between the lens 3 and the optical recording medium 8, compared to a case of realizing the same effective numerical aperture by a non-immersed stigmatic focusing solid immersion lens.

An especially preferable embodiment is that the thickness of the liquid lubricant layer is not more than 1/2 of the wavelength in vacuum of the light used for recording or reproduction and not less than 3 nm. In this case, the evanescent light can be transmitted without being greatly attenuated, and the immersion state can be sufficiently maintained.

It is preferable to use a liquid lubricant since the abrasion and damage between the lens 3 and the optical recording medium 8 can be decreased when the surface of the optical recording medium 8 is scanned with the lens 3, and since the distance between the lens 3 and the optical recording medium 8 can be stably maintained by surface tension, inter-molecular force, etc.

Also when an optical waveguide having a minute aperture is used for recording, it is preferable to fill the clearance between the aperture of the optical waveguide and the surface of the optical recording medium 8 with a liquid lubricant, since the wavelength of light in the liquid lubricant becomes as short as the value obtained by dividing the wavelength in vacuum by the refractive index, lessening the diffusion of the near-field light propagating from the minute aperture.

The liquid lubricant is not especially limited. The liquid lubricants which can be used here include lubricants, surfactants, etc. such as polyfluoroethers, polyfluoroesters, fluoroalkylethylenes and fluoroalkylethanols. The refractive index is not especially limited, but it is preferable that the refractive index is about 1.4 to about 1.7.

The materials which can be used to form the near-field lens 3 include glass materials for optical lenses such as BK7. It is especially preferable to use a glass material with a high refractive index such as $LaSFN_9$ (refractive index 1.85) or a semiconductor material with a high refractive index such as GaAs or Si for the lens 3 since the effective numerical aperture can be made larger.

It is preferable that the radius of the near-field lens 3 is about 0.5 mm to about 3 mm, since the lens 3 can be easily produced and since the it is not required to keep the action distance of the collimating lens 2 large.

Furthermore, a spherical lens formed by a material mainly composed of aluminum oxide such as sapphire is preferable since the abrasion and flaws on the surface of the lens 3 caused when the surface of the optical recording medium 8 contacts the lens 3 can be decreased.

The edge of the lens 3 can also be worked, as required, to be tapered, for example, as disclosed in US Patent No. 5,125,750.

A further other embodiment of the optical recording device of the present invention is described below.

The optical system for emitting light comprises a collimating lens located on the light source side and a near-field lens with an effective numerical aperture of 0.8 to 2 provided in contact with or closely to an optical recording medium, and an apodizer is disposed on the entrance pupil side of the light source side of the collimating lens or on the exit pupil side.

In this embodiment, a case of using a solid immersion lens is described below. However, a stigmatic focusing solid immersion lens or liquid immersion lens can also be used instead of the solid immersion lens.

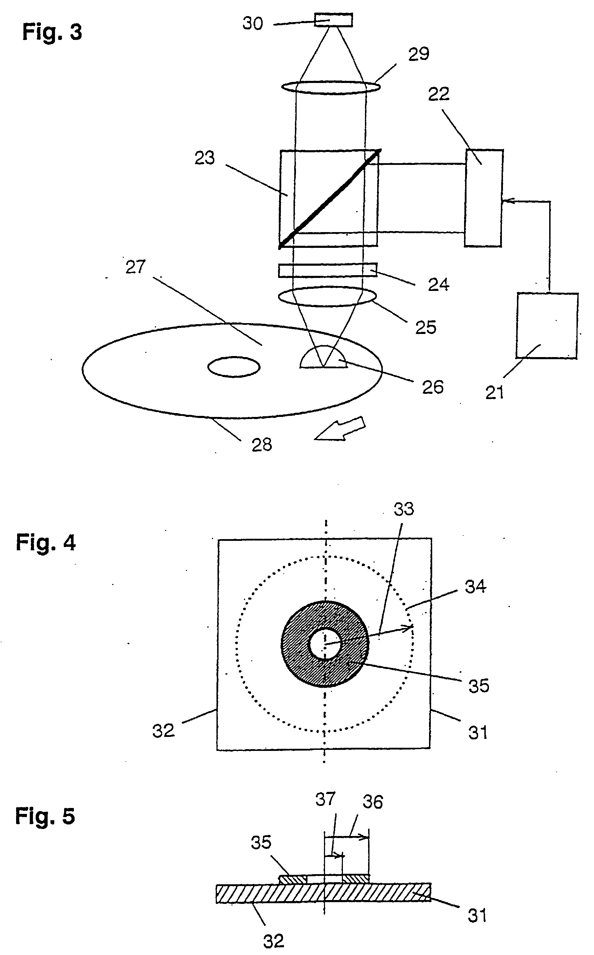

The optical recording device of the present invention shown in Fig. 3 comprises a laser drive circuit 21, a semiconductor laser 22, a beam splitter 23, an apodizer 24, a collimating lens 25, a solid immersion lens as a near-field lens 26, a solid lubricant layer as a lubricant layer 27 on the outermost surface of an optical recording medium 28, the optical recording medium 28 having a recording layer (not illustrated) below the lubricant layer 27, a condenser lens 29 and a photo diode 30. The near-field lens 26 faces the solid lubricant layer 27 with a slight clearance kept between them.

In Fig. 3, the semiconductor laser 22 is driven by a laser drive circuit 21, to emit a laser beam. The laser beam is turned toward the collimating lens 25 from the beam splitter 23 through the apodizer 24. The laser beam passes through the collimating lens 25 and the near-field lens 26, being condensed on the optical recording medium 28.

The light reflected from the optical recording medium 28 propagates through the near-field lens 26, the collimating lens 25, the apodizer 24 and the condenser lens 29, to fall on the photo diode 30, and the information recorded in the optical recording medium 28 brought by the reflected light is detected as electric signals.

The apodizer 24 has effects of increasing the depths of focuses of the collimating lens 25 and the solid immersion lens 26 and reducing the beam waist of the laser light beam condensed by the solid immersion lens 26.

The method of improving the focus characteristic of the solid immersion lens (or said stigmatic focusing solid immersion lens or liquid immersion lens) used as the near-field lens 26 by combining the collimating lens 25 with the apodizer 24 has been found for the first time in the present invention.

It is preferable that the apodizer 24 is installed on the entrance pupil side of the light source side of the collimating lens 25 as shown in Fig. 3, since the aberration can be kept small. However, it can also be disposed on the exit pupil side of the collimating lens 25.

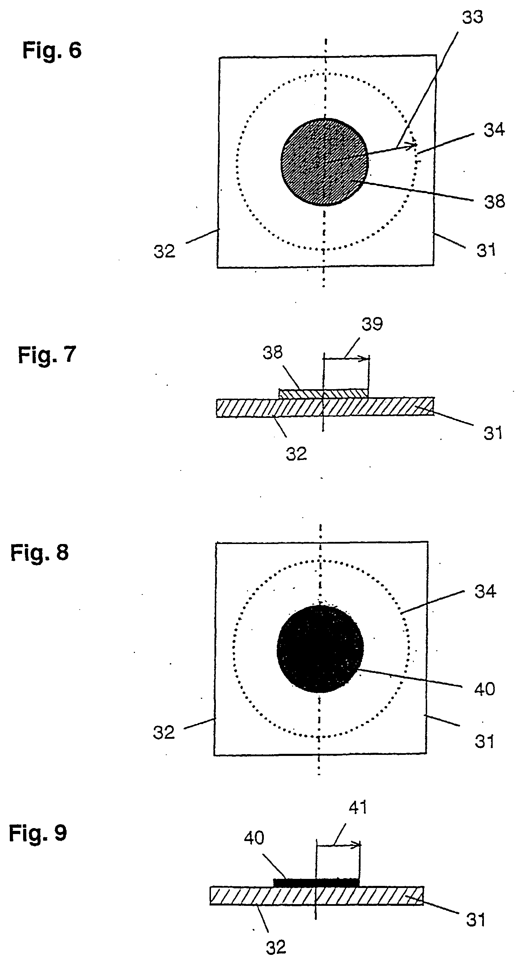

Structural examples of the apodizer 24 are shown in Figs. 4, 6 and 8. Figs. 4 and 5 show an example of an annular phase correction plate. Figs. 6 and 7 show an example of a circular phase correction plate. Figs. 8 and 9 show an example of a center mask with a light intercepting portion at the center. Though not illustrated, as a further other structural example of the apodizer, a zonal aperture mask can also be used.

Especially the annular phase correction plate shown in Fig. 4 and the circular phase correction plate shown in Fig. 6 are preferable since the intensity of the convergent light beam at the center is high. The former annular phase correction plate beam is more preferable since the side lobe can be kept small.

The structures of the phase correction plates used for the apodizer 24 are described below.

Fig. 4 is a plan view showing an annular phase correction plate, and Fig. 5 is a cross sectional view of it. In Fig. 4, the phase correction plate 31 is usually produced by forming a dielectric film on a glass substrate 32 by vacuum evaporation or sputtering, etc. to ensure that the phase contrast becomes almost p as the optical thickness, and subsequently etching the formed dielectric film for forming a ring.

The circular phase correction plate of Fig. 6 and the center mask of Fig. 8 can also be produced by similar methods.

They can also be produced by direct molding from glass, or coating a glass substrate with a photo resist, patterning and etching.

In Fig. 4, arrow 33 indicates the radius of the opening 34 of the apodizer 31. The shaded annular portion 35 is raised from the surrounding flat portion by the thickness corresponding to the phase contrast p. In Fig. 5, arrow 36 indicates the radius of the circumference of the annular portion 35, and arrow 37 indicates the circumference of the space inside the annular portion 35.

If the radius 36 of the circumference of the annular portion 35 is a, the radius 37 of the space inside the annular portion is b and the radius 33 of the opening 34 is 1, then it is preferable that a is in a range from about 0.4 to about 0.5 and that b is in a range from about 0.15 to about 0.35, since a good phase correction plate 31 can be obtained.

In Figs. 6 and 7, arrow 39 indicates the radius of the circular portion 38. If the radius 39 of the circular portion 38 is c, it is preferable that c is in a range from about 0.2 to about 0.4, since a good phase correction plate 31 can be obtained.

In Figs. 8 and 9, arrow 41 indicates the radius of the intercepting portion 40. If the radius 41 of the intercepting portion 40 is d, it is preferable that d is in a range from about 0.2 to about 0.4 since a good phase correction plate 31 can be obtained.

The annular portion 35, the circular portion 38 and the intercepting portion 40 have a projected sectional form, but the projected sectional form can be substituted, for example, by an undulating form as far as the object can be achieved.

Embodiments of the optical recording medium of the present invention are described below.

The optical recording medium of the present invention basically has a lubricant layer as the outermost layer. The lubricant layer is a liquid lubricant layer or a solid lubricant layer.

So, when the optical recording medium of the present invention contacts the near-field lens or optical waveguide provided in contact with or closely to the surface of the optical recording medium, it does not happen that the surface of the recording medium and the optical system are damaged.

For the optical recording medium of the present invention, preferable embodiments suitable for respective applications are enumerated below. The order of respective layers stated blow means that the respective layers are laminated in this order from the incident light side.

When the optical recording medium is exclusively used for reproduction, the respective laminates composed as follows are preferable.

M1: Liquid lubricant layer/reflective layer/substrate having pits

M2: Solid lubricant layer/reflective layer/substrate having pits

M3: Liquid lubricant layer/solid lubricant layer/reflective layer/substrate having pits

M4: Liquid lubricant layer/dielectric layer/reflective layer/substrate having pits

M5: Liquid lubricant layer/solid lubricant layer/dielectric layer/reflective layer/substrate having pits

When the optical recording medium is used for additional writing, the respective laminates composed as follows are preferable.

M6: Liquid lubricant layer/recording layer/substrate having pits and/or tracking groove

M7: Liquid lubricant layer/solid lubricant layer/recording layer/substrate having pits and/or tracking groove

M8: Liquid lubricant layer/solid lubricant layer/dielectric layer/recording layer/substrate having pits and/or tracking groove

M9: Liquid lubricant layer/dielectric layer/recording layer/substrate having pits and/or tracking groove

The recording layer used in these laminates can be a phase change recording layer, colorant recording layer, etc.

When the optical recording medium is used for rewriting, the respective laminates composed as follows are preferable.

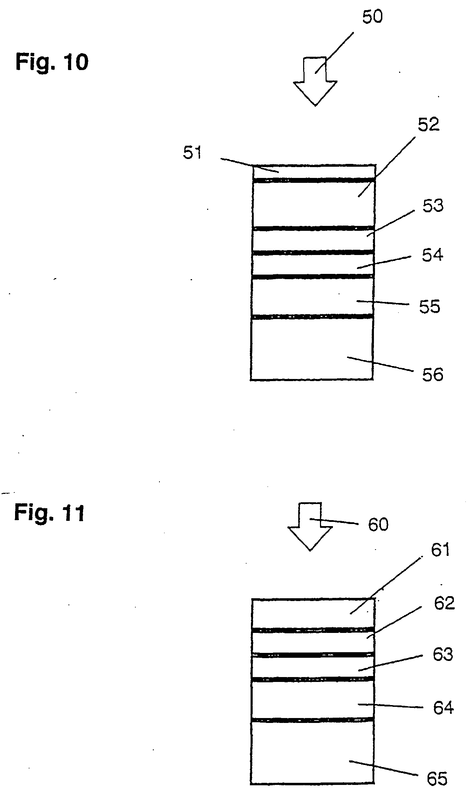

M10 (shown in Fig. 10): Liquid lubricant layer 51/first dielectric layer 52/recording layer 53/second dielectric layer 54/reflective layer 55/substrate 56. The arrow 50 in Fig. 10 shows the incident light direction.

M11: Solid lubricant layer/first dielectric layer/recording layer/second dielectric layer/reflective layer/substrate.

M12: Liquid lubricant layer/recording layer/dielectric layer/reflective layer/substrate

M13 (shown in Fig. 11): Solid lubricant layer 61/recording layer 62/dielectric layer 63/reflective layer 64/substrate 65. The arrow 60 in Fig. 11 indicates the incident light direction.

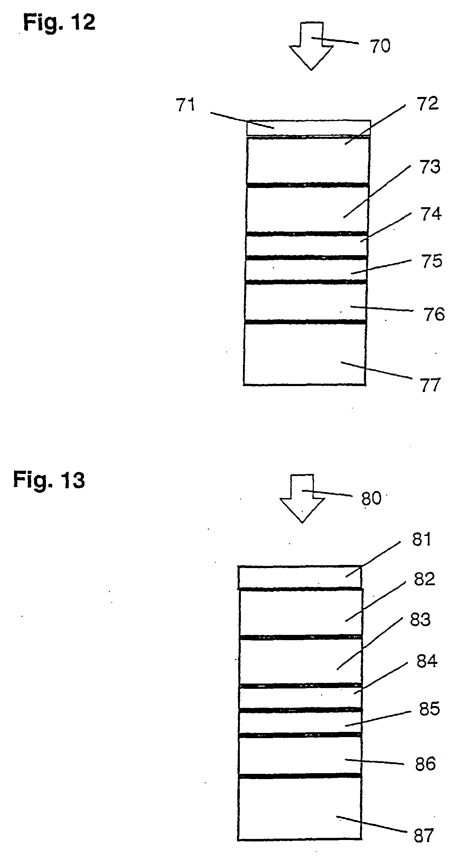

M14 (shown in Fig. 12): Liquid lubricant layer 71/protective resin layer 72/adhesive layer/first dielectric layer 73/recording layer 74/second dielectric layer 75/reflective layer 76/substrate 77. The arrow 70 in Fig. 12 indicates the incident light direction.

M15 (shown in Fig. 13): Solid lubricant layer 81/protective resin layer 82/adhesive layer/first dielectric layer 83/recording layer 84/second dielectric layer 85/reflective layer 86/substrate 87. The arrow 80 in Fig. 13 shows the incident light direction.

M16: Liquid lubricant layer/protective resin layer/adhesive layer/recording layer/dielectric layer/reflective layer/substrate.

M17: Solid lubricant layer/protective resin layer/adhesive layer/recording layer/dielectric layer/reflective layer/substrate.

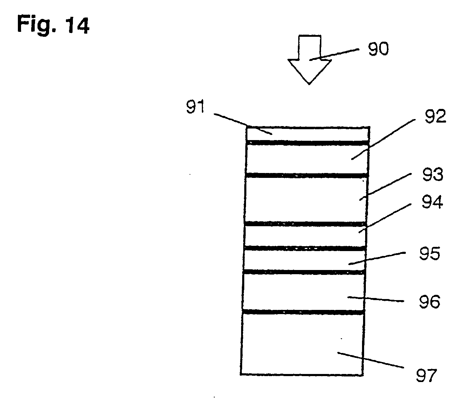

M18 (shown in Fig. 14): Liquid lubricant layer 91/solid lubricant layer 92/first dielectric layer 93/recording layer 94/second dielectric layer 95/reflective layer 96/substrate 97. The arrow 90 in Fig. 14 indicates the incident light direction.

M19: Liquid lubricant layer/solid lubricant layer/recording layer/dielectric layer/reflective layer/substrate.

The above M14 and M15 are especially preferable. The recording layer used in these laminates can be a phase change recording layer or magneto-optical recording layer, etc.

When the optical recording medium is an optical recording medium having a magneto-optical recording layer, the respective laminates composed as follows are preferable.

M20: Liquid lubricant layer/solid lubricant layer/dielectric layer/recording layer/reflective layer/substrate.

M21: Liquid lubricant layer/solid lubricant layer/recording layer/reflective layer/substrate.

It is preferable that the substrate used in the above rewritable type optical recording media has pits for a format and/or tracking or a tracking groove. The pits or groove has a secondary effect of easing the residual stress caused when thin films such as a recording layer, dielectric layer and reflective layer are formed on the surface, to decrease the deformation such as warping of the substrate. It is preferable that the depth of the pits or groove is less than about 1/6 wavelength. Especially preferable is about 1/8 wavelength.

The materials, thicknesses, etc. of the respective layers are described below.

The liquid lubricant layer is as described before. It is preferable that the thickness is not larger than 1/2 of the light wavelength in vacuum and not smaller than 3 nm. A more preferable range is 5 nm to 200 nm, and a further more preferable range is 5 nm to 50 nm.

It is preferable that the material used to form the solid lubricant layer is a material mainly composed of carbon or carbon nitride. More specifically, an amorphous diamond-like carbon film or carbon nitride film can be used.

These films are excellent in durability and provide good lubricity when they contact the surface of the lens or optical waveguide. The layer thickness should be about 5 nm to about 100 nm. Especially if a liquid lubricant layer is provided on a solid lubricant layer, the lubrication effect can be further improved.

The dielectric layer or first dielectric layer is formed by a dielectric material substantially transparent in the light wavelength range used for recording and reproduction. Specifically an inorganic thin film of ZnS, $SiO_2$, silicon nitride, aluminum oxide, amorphous carbon, diamond-like carbon or silicon carbide, etc. can be used. Especially a thin film of ZnS, metal oxide thin films of Si, Ge, Al, Ti, Zr, Ta, etc., nitride thin films of Si, Al, etc., carbide thin films of Si, Ti, Zr, Hf, etc., and films of mixtures of these compounds are preferable since they have high heat resistance.

Furthermore, films of these materials mixed with carbon or a fluoride such as $MgF_2$ are also preferable since they are small in residual stress. Especially in view of excellent stability and heat resistance, a mixture of ZnS and SiO and a mixture with carbon further added to it, and silicon nitride are preferable.

It is preferable in view of the mechanical strength of the dielectric layer that the thickness of the dielectric layer or first dielectric layer is 20 nm to 200 nm. If the thickness is too small, the dielectric layer is likely to be flawed, and if too large, such problems as lower productivity and warping due to film stress are caused.

When a solid immersion lens, etc. is used for recording by use of near-field light, it is preferable that the refractive index of the lens is almost equal to that of the dielectric layer. So, it is preferable that the refractive index of the dielectric layer used is 1.7 to less than 2.3.

When the recording film must be protected by a relatively thick layer, a protective resin layer can be provided, as required, between the lubricant layer and the recording layer. In this case, the protective resin layer can be a flexible resin sheet or resin film, or a layer formed by coating with a ultra-violet light setting resin and hardening it.

It is preferable that the thickness of the protective resin layer is 20 μm to 200 μm. Especially it is preferable that a resin sheet or resin film is bonded using an adhesive such as an ultraviolet light setting resin, etc., since other layers such as a solid lubricant layer can be pre-formed on the surface of the resin sheet or film.

In the case of reproduction type, as the recording layer, a reflective metal film of aluminum, gold or silver, etc. can be preferably used. In the case of additional writing type, a phase change recording material (Te sub-oxide or TeSbGe alloy) or dye recording material (cyanine dye, etc.) can be preferably used. Furthermore, in the case of rewritable type, a magneto-optical recording material (TbFeCo alloy, etc.) or phase change optical recording material (TeSbGe alloy, etc.) can be preferably used.

Especially it is preferable to use a phase change recording material as the recording layer since the optical system used for recording can be simplified and since large reproduced signals can be obtained even in small mark recording.

As the composition of the recording layer used for said phase change recording, a composition containing tellurium and at least two or more metals selected from germanium, antimony, indium, silver, palladium, platinum, gold, cobalt, chromium, niobium and nickel is preferable since the recording characteristics, recording mark stability and reversibility are excellent.

For example, Pd-Ge-Sb-Te alloy, Nb-Ge-Sb-Te alloy, Ni-Ge-Sb-Te alloy, Ge-Sb-Te alloy, Co-Ge-Sb-Te alloy, In-Sb-Te alloy, Ag-In-Sb-Te alloy, In-Se alloy, etc. can be used.

Since the record can be rewritten many times, Pd-Ge-Sb-Te alloy, Nb-Ge-Sb-Te alloy, Ge-Sb-Te alloy and Co-Ge-Sb-Te alloy are especially preferable.

Especially Pd-Ge-Sb-Te alloy and Nb-Ge-Sb-Te alloy are preferable because of short erasure time, possibility of repeating recording and erasing many times and excellent recording characteristics such as C/N and erasure rate.

The thickness of the recording layer is not especially limited, but it is preferable that the thickness is 10 to 100 nm. Especially because of high recording and erasing sensitivities and possibility of many times of recording and erasing, a range from 10 nm to 40 nm is more preferable, and a range from 10 nm to 30 nm is especially preferable.

It is especially preferable that the composition of the recording layer is expressed by the following formula. Composition formula: $M_z(Sb_xTe_{1-x})_{1-y-z}(Ge_{0.5}Te_{0.5})_y$

$$0.35 \leqq x \leqq 0.5$$

$$0.2 \leqq y \leqq 0.5$$

$$0.0005 \leqq z \leqq 0.005$$

where M denotes at least one metal selected from a group consisting of palladium, niobium, platinum, silver, gold and cobalt, and x, y, z and respective numerals express the number of atoms of each element (number of moles of each element).

For the second dielectric layer, the same materials as used for the first dielectric layer can be preferably used. The material of the second dielectric layer can be identical with or different from that of the first dielectric layer. In view of recording characteristics, it is preferable that the thickness of the second dielectric layer is 5 nm to 80 nm. A more preferable range is 5 nm to 30 nm, and an especially preferable range is 10 nm to 30 nm.

Preferable materials which can be used as the reflective layer include metals capable of reflecting light such as Al, Au, Ag and Cu, their alloys and mixtures consisting of any of these metals and any of metal compounds of these metals such as metal oxides, metal nitrides and metal carbides. Especially metals with a high reflectance such as Al, Au, Ag and Cu and alloys containing 80 atom% or more of any of these metals as a main component are preferable. As required, a semiconductor material with a high refractive index such as Si or Ge can also be used. A typical thickness of the layer is about 50 nm to about 200 nm.

Typical alloys used for the reflective layer include those obtained by adding 5 atom% to 0.5 atom% in total of at least one element selected from Si, Mg, Cu, Pd, Ti, Hf, Zr. Ta, Cr, Nb, Mn, etc. to Al, and those obtained by adding 20 atom% to 1 atom% in total of at least one element selected from Cr, Ag, Cu, Pd, Pt and Ni to Au. Especially an alloy mainly containing Al is preferable since the material cost can be low.

Since an Al alloy is good in corrosion resistance, an alloy obtained by adding 5 atom% to 0.5 atom% in total of one or more metals selected from Ti, Cr, Zr and Hf and 0.05 atom% to 0.5 atom% of Pd to Al is preferable.

The substrate used can be a glass substrate or resin substrate. It is preferable in view of low cost and easy processability to use a substrate made of at least one resin selected from a group consisting of polycarbonates, polyolefins, polyimides, polyamides, polyphenylene sulfide and polyethylene terephthalate.

It is practical that the thickness of the substrate is 0.003 mm to 5 mm. If the thickness is less than 0.003 mm, it is difficult to handle it in forming the recording layer, etc. by a vacuum thin film forming method. If more than 5 mm, the weight of the optical recording medium becomes large unpreferably.

For producing an inexpensive optical floppy, etc., it is preferable that the substrate is a flexible resin film or sheet with a thickness of 10 μm to 200 μm. In this case, for a phase change recording medium, it is preferable to use a resin substrate with a thermal deformation temperature of 150°C or higher, since the initialization (crystallization) can be effected simply by a heating means such as an oven. The resin can be selected from polyimide and polyamide resins.

Especially in the case of a phase change recording medium, it is preferable to constitute the main portion of the optical recording medium as described below, because of high recording sensitivity, possibility of overwriting by a single beam at a high speed, large erasure rate and good erasing characteristic.

An optical recording medium comprising a laminate structure in which a 5 nm to 50 nm thick liquid lubricant layer, a 5 nm to 100 nm thick carbon film as a solid lubricant layer, a 20 nm to 200 nm thick mixed film consisting of ZnS, SiO and carbon as a first dielectric layer, a 10 nm to 30 nm thick recording layer, a 10 nm to 30 nm thick second dielectric layer, a 50 nm to 200 nm thick reflective layer and a substrate are laminated in this order from the incident light side.

The light source used for recording of the optical recording medium is a high intensity light source such as a laser beam. Especially a semiconductor laser beam is preferable because of small light source, low power consumption and easy modulation.

The methods for forming the respective layers of the present invention are described below. The dielectric layer, recording layer and reflective layer can be formed by a vacuum thin film formation method such as sputtering as adopted hitherto. To form a protective resin layer made of a violet light setting resin, spin coating can be followed by hardening by ultraviolet light. A resin dissolved by a solvent can also be applied. If the protective resin layer is a resin sheet or film, it can be bonded using an adhesive of an ultraviolet light setting resin.

For the semiconductor laser, beam splitter and photo diode for detection and their optical disposition in the optical recording medium, conventional techniques known in the CD and DVD devices exclusive for reproduction, and rewritable type optical disc devices for phase change optical disc and magneto-optical disc can be used.

Examples

[Example 1]

A 150 nm thick reflective layer made of Al-Hf-Pd alloy was formed on a 0.6 mm thick 12 cm dia. polycarbonate disc substrate by RF sputtering in an argon gas atmosphere of 0.2 Pa pressure, with the substrate rotated around itself and around the sputtering source, and furthermore, a 16 nm thick second dielectric layer made of a mixture consisting of ZnS and SiO$_2$ (SiO$_2$ 20 mol%), a 19 nm thick recording layer made of Pd$_{0.002}$Ge$_{0.17}$Sb$_{0.27}$Te$_{0.56}$ (molar ratio), a 140 nm thick dielectric layer made of a mixture Consisting of ZnS and SiO$_2$ (SiO$_2$ 20 mol%) and a 25 nm thick amorphous carbon film were formed one after another. Then, the entire recording region of the recording layer was crystallized by a laser beam, and the outermost surface was coated with perfluoroalkylethylenes (Rf-CH=CH$_2$, Rf: C$_6$F$_{13}$ ~ C$_{12}$F$_{25}$) to have a thickness of about 10 nm (measured by the ellipsometric method) by a spin coater, for forming a lubricant layer. Thus, an optical recording medium of the present invention was prepared.

[Example 2]

A 120 nm thick reflective layer made of Al-Hf-Pd alloy was formed on a 0.75 mm thick 12 cm dia. polyimide resin film substrate by RF sputtering in an argon gas atmosphere of 0.2 Pa pressure, with the substrate rotated around itself and around the sputtering source, and furthermore, a 12 nm thick second dielectric layer made of a mixture consisting of ZnS and SiO$_2$ (SiO$_2$ 20 mol%), a 20 nm thick recording layer made of Pd$_{0.002}$Ge$_{0.17}$Sb$_{0.27}$Te$_{0.56}$ (molar ratio), a 25 nm thick dielectric layer made of a mixture consisting of ZnS and SiO$_2$ (SiO$_2$ 20 mol%) and a 25 nm thick amorphous carbon film as a dielectric layer were formed one after another. Furthermore, on the other side of the film substrate, a recording layer with the same composition was formed by sputtering. Then, the film substrate was heated in an oven at 200°C for 5 minutes, to crystallize the entire surface of the recording layer, and was cooled naturally. The outermost surface was coated with perfluoroalkylethylenes (Rf-CH=CH$_2$, Rf: C$_6$F$_{13}$ ~ C$_{12}$F$_{25}$) to have a thickness of about 10 nm (measured by the ellipsometric method) by a spin coater, for forming a lubricant layer. Thus, a recording medium of the present invention was prepared.

[Example 3]

The carbon film as the outermost surface of the optical recording medium with the same composition as that of the optical recording medium of Example 1 was coated with an ultraviolet light setting acrylic resin (SD101 produced by Dainippon Ink & Chemicals, Inc.), and the resin was hardened by irradiation with ultraviolet light, to form a 0.010 mm thick protective resin layer. The outermost surface was coated with perfluoroalkylethylenes (Rf-CH=CH , Rf: C$_6$F$_{13}$ ~ C$_{12}$F$_{25}$) to have a thickness of about 10 nm (measured according to the ellipsometric method) by a spin coater, for forming a lubricant layer. Thus, an optical recording medium of the present invention was prepared.

Industrial Applicability

The present invention provides an optical recording device large in the depth of focus, good in operation stability, and high in assembling accuracy allowance.

The optical recording device is unlikely to damage the optical recording medium and the optical system when the information is recorded on the optical recording medium or read from the optical recording medium even if the optical system (near-field lens or optical waveguide) used is located in contact with or very closely to the surface of the optical recording medium.

**Claims**

1. An optical recording device, which comprises an optical recording medium, an optical system for entering information into the optical recording medium or delivering information from the optical recording medium, and a light source, characterized in that the outermost layer of the optical recording medium facing the optical system is a lubricant layer, and that the optical system has a near-field lens provided in contact with or closely to the surface of the outermost layer of the optical recording medium.

2. An optical recording device, according to claim 1, wherein the effective numerical aperture of the near-field lens is 0.8 to 2.

3. An optical recording device, which comprises an optical recording medium, an optical system for entering information into the optical recording medium or delivering information from the optical recording medium, and a light source, characterized in that the outermost layer of the optical recording medium facing the optical system is a lubricant layer, and that the optical system has a near-field lens provided in contact with or closely to the surface of the outermost layer of the optical recording medium, a collimating lens provided between the near-field lens and the light source, and an apodizer provided on the light source side or the near-field lens side of the collimating lens.

4. An optical recording device, according to claim 3, wherein the effective numerical aperture of the near-field lens is 0.8 to 2.

5. An optical recording device, according to claim 1 or 3, wherein the near-field lens is a lens selected from a group consisting of a solid immersion lens, stigmatic focusing solid immersion lens and liquid immersion lens.

6. An optical recording device, according to claim 1 or 3, wherein the surface of the near-field lens on the light source side and the surface on the optical recording medium side are spherical.

7. An optical recording device, according to claim 6, wherein the shortest distance between the surface of the optical recording medium and the surface of the near-field lens in the periphery of the incident light beam spot on the surface of the optical recording medium is 10 nm to 200 nm.

8. An optical recording device, according to claim 1 or 3, wherein the near-field lens is made of a material mainly composed of aluminum oxide.

9. An optical recording device, which comprises an optical recording medium, an optical system for entering information into the optical recording medium or delivering information from the optical recording medium, and a light source, characterized in that the outermost layer of the optical recording medium facing the optical system is a lubricant layer, and that the optical system has an optical waveguide having a minute aperture provided in contact with or closely to the surface of the outermost layer of the optical recording medium.

10. An optical recording device, according to claim 1, 3 or 9, which is a laminate having the lubricant layer as the outermost layer and successively a recording layer, a dielectric layer, a reflective layer and a substrate in this order.

11. An optical recording device, according to claim 1, 3 or 9, which is a laminate having the lubricant layer as the outermost layer and successively a first dielectric layer, a recording layer, a second dielectric layer, a reflective layer and a substrate in this order.

12. An optical recording device, according to claim 10, wherein a protective resin layer is provided between the lubricant layer and the recording layer.

13. An optical recording device, according to claim 10, wherein the lubricant layer is a lubricant layer formed by a flowable liquid.

14. An optical recording device, according to claim 10, wherein the lubricant layer is a lubricant layer formed by a solid.

15. An optical recording device, according to claim 10, wherein the lubricant layer consists of a lubricant layer formed by a solid and a lubricant layer formed by a flowable liquid on the lubricant layer formed by a solid.

**16.** An optical recording device, according to claim 13 or 15, wherein the thickness of the lubricant layer formed by a flowable liquid is not larger than 1/2 of the wavelength in vacuum of the light used for recording or reproduction and not smaller than 3 nm.

**17.** An optical recording device, according to claim 13 or 15, wherein the lubricant of the lubricant layer formed by a flowable liquid contains at least one compound selected from a group consisting of polyfluoroethers, polyfluoroesters, fluoroalkylethylenes and fluoroalkylethanols.

**18.** An optical recording device, according to claim 14 or 15, wherein the lubricant of the lubricant layer formed by a solid is mainly composed of carbon or carbon nitride.

**19.** An optical recording device, according to claim 10, wherein the recording layer is made of a phase change recording material or magneto-optical recording material.

**20.** An optical recording device, according to claim 19, wherein the recording layer is made of a phase change recording material and the phase change recording material contains tellurium and at least two metals selected from a group consisting of germanium, antimony, indium, silver, palladium, platinum, gold, cobalt, chromium, niobium and nickel.

**21.** An optical recording device, according to claim 11, wherein the thickness of the first dielectric layer is 20 nm to 200 nm.

**22.** An optical recording device, according to claim 10, wherein the substrate is made of at least one resin selected from a group consisting of polycarbonates, polyolefins, polyimides, polyamides, polyphenylene sulfide and polyethylene terephthalate.

**23.** An optical recording device, according to claim 10, wherein the substrate is a flexible resin film or sheet with a thickness of 10 μm to 200 μm.

**24.** An optical recording device, according to claim 3, wherein the apodizer has a zonal aperture or a circular or annular phase contrast plate.

**25.** An optical recording device, according to claim 3, wherein the apodizer is a circular phase correction plate.

**26.** An optical recording device, according to claim 3, wherein the apodizer is an annular phase correction plate.

**27.** An optical recording device, according to claim 3, wherein the apodizer is provided on the light source side of the collimating lens.

**28.** An optical recording medium, which comprises a recording medium and a substrate and allows information to be recorded or reproduced, comprising a laminate consisting of a lubricant layer, said recording layer, a dielectric layer, a reflective layer and said substrate laminated in this order.

**29.** An optical recording medium, which comprises a recording medium and a substrate and allows information to be recorded or reproduced, comprising a laminate consisting of a lubricant layer, a first dielectric layer, said recording layer, a second dielectric layer, a reflection layer and said substrate laminated in this order.

**30.** An optical recording medium, according to claim 28, wherein a protective resin layer is provided between the lubricant layer and the recording layer.

**31.** An optical recording medium, according to claim 28, wherein the lubricant layer is a lubricant layer formed by a flowable liquid.

**32.** An optical recording medium, according to claim 28, wherein the lubricant layer is a lubricant layer formed by a solid.

**33.** An optical recording medium, according to claim 28, wherein the lubricant layer consists of a lubricant layer formed by a solid and a lubricant layer formed by a flowable liquid on the lubricant layer formed by a solid.

**34.** An optical recording medium, according to claim 31 or 33, wherein the thickness of the lubricant layer formed by a flowable liquid is not lager than 1/2 of the wavelength in vacuum of the light used for recording or reproduction and not smaller than 3 nm.

**35.** An optical recording medium, according to claim 31 or 33, wherein the lubricant of the lubricant layer formed by a flowable liquid contains at least one compound selected from a group consisting of polyfluoroethers, polyfluoroesters, fluoroalkylethylenes and fluoroalkylethanols.

**36.** An optical recording medium, according to claim 32 or 33, wherein the lubricant of the lubricant layer formed by a solid is mainly composed of carbon or carbon nitride.

**37.** An optical recording medium, according to claim 28, wherein the recording layer is made of a phase change recording material or magneto-optical recording material.

**38.** An optical recording medium, according to claim 37, wherein the recording layer is made of a phase change recording material and the phase change recording material contains tellurium and at least two metals selected from a group consisting of germanium, antimony, indium, silver, palladium, platinum, gold, cobalt, chromium, niobium and nickel.

**Fig. 1**

**Fig. 2**

**Fig. 3**

**Fig. 4**

**Fig. 5**

**Fig. 6**

33

34

38

32

31

**Fig. 7**

39

38

31

32

**Fig. 8**

34

40

32

31

**Fig. 9**

41

40

31

32

**Fig. 10**

**Fig. 11**

## Fig. 12

71
72
73
74
75
76
77
70

## Fig. 13

81
82
83
84
85
86
87
80

**Fig. 14**

# INTERNATIONAL SEARCH REPORT

International application No.

PCT/JP98/01683

| A. CLASSIFICATION OF SUBJECT MATTER |
|---|
| Int.Cl⁶   G11B7/135, G11B7/24 |

According to International Patent Classification (IPC) or to both national classification and IPC

| B. FIELDS SEARCHED |
|---|

Minimum documentation searched (classification system followed by classification symbols)
Int.Cl⁶   G11B7/135, G11B7/24

Documentation searched other than minimum documentation to the extent that such documents are included in the fields searched
Jitsuyo Shinan Koho          1940-1998   Jitsuyo Shinan Toroku Koho   1996-1998
Kokai Jitsuyo Shinan Koho   1971-1998   Toroku Jitsuyo Shinan Koho    1994-1998

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | JP, 5-189796, A (The Board of Trustees of The Leland Stamford Junior University), July 30, 1993 (30. 07. 93) (Family: none) | 1, 9 |
| Y | | 2-8, 24-27 |
| Y | JP, 59-38934, A (Olympus Optical Co., Ltd.), March 3, 1984 (03. 03. 84) (Family: none) | 1-9, 24-27 |
| Y | JP, 7-334865, A (Hitachi Maxell, Ltd.), December 22, 1995 (22. 12. 95) (Family: none) | 10-23, 28-38 |
| Y | JP, 7-138589, A (Hitachi Maxell, Ltd.), May 30, 1995 (30. 05. 95) (Family: none) | 10-23, 28-38 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| April 23, 1998 (23. 04. 98) | May 12, 1998 (12. 05. 98) |

| Name and mailing address of the ISA/ Japanese Patent Office | Authorized officer |
|---|---|
| Facsimile No. | Telephone No. |

Form PCT/ISA/210 (second sheet) (July 1992)